Europäisches Patentamt

European Patent Office

Office européen des brevets

(11) Numéro de publication: **0 206 885 B1**

(12) **FASCICULE DE BREVET EUROPEEN**

(45) Date de publication de fascicule du brevet:
**11.09.91**

(51) Int. Cl.⁵: **C01G 51/00**, C01G 53/00, C01G 45/00

(21) Numéro de dépôt: 86401196.0

(22) Date de dépôt: **04.06.86**

Le dossier contient des informations techniques présentées postérieurement au dépôt de la demande et ne figurant pas dans le présent fascicule.

(54) Compositions de manganites de métaux de transition sous forme de particules ou sous forme de céramiques, leur préparation et leur application notamment dans la fabrication de thermistances.

(30) Priorité: 04.06.85 FR 8508401

(43) Date de publication de la demande:
**30.12.86 Bulletin 86/52**

(45) Mention de la délivrance du brevet:
**11.09.91 Bulletin 91/37**

(84) Etats contractants désignés:
**AT BE CH DE FR GB IT LI LU NL SE**

(56) Documents cités:
**DE-B- 1 249 240**

**CHEMICAL ABSTRACTS, vol. 96, no. 8, février 1982, page 685, résumé no. 62052j, Columbus, Ohio, US; A.B. DEVALE et al.: "Structural, electrical and x-ray spectroscopic study of NiMnCuO4 (oxidic manganite) spinel", & J. SINGAPORE NATL. ACAD. SCI. 1979 (Publ. 1981), 8, 107-9**

(73) Titulaire: **UNIVERSITE PAUL SABATIER (TOULOUSE III)**
**118 Route de Narbonne**
**F-31062 Toulouse Cédex(FR)**

(72) Inventeur: **Rousset, Abel**
**16, rue Jean Moulin**
**F-31062 Toulouse Cedex(FR)**
Inventeur: **Boissier, Guy**
**7, Allée C. Soula**
**F-31400 Toulouse(FR)**
Inventeur: **Jabry, El Hadj**
**3, Impasse Lacordaire**
**F-31078 Toulouse Cedex(FR)**
Inventeur: **Caffin, Jean-Pierre**
**4, Bd Léon Bourgeois**
**F-81100 Castres(FR)**

(74) Mandataire: **Nony, Michel et al**
**Cabinet NONY & CIE, 29, rue Cambacérès**
**F-75008 Paris(FR)**

CHEMICAL ABSTRACTS, vol. 99, 1983, page 595, résumé no. 63139s, Columbus, Ohio, US; N. YAMAMOTO et al.: "Preparation by a wet method and ionic distribution of transition metal-substituted hausmannite spinel", & FUNTAI OYOBI FUNMATSUYAKIN 1983, 30(2), 48-54

CHEMICAL ABSTRACTS, vol. 79, 1973, page 584, résumé no. 26694k, Columbus, Ohio, US; Iv. YANACHKOVA: "Thermal decomposition of carbonates and formation of cobalt manganese oxide (CoMn2O4) spinel", & GOD. VISSH. KHIMIKOTEKHNOL. INST., SOFIA 1969 (Publ. 1971), 16(1), 57-66

CHEMICAL ABSTRACTS, vol. 83, 1975, page 628, résumé no. 52483t, Columbus, Ohio, US; I. LUKACS et al.: "Formation of magnesium ferrite spinel during the thermal decomposition of oxalate-containing systems", & J. THERM. ANAL. 1975, 7(2), 359-68

JOURNAL OF INORGANIC NUCLEAR CHEMISTRY, vol. 26, 1964, pages 1369-1377, Pergamon Press Ltd., Northern Ireland; D.G. WICKHAM: "Solid-phase equilibria in the system NiO-Mn2O3-O2"

## Description

La présente invention a pour objet de nouvelles compositions de manganites de métaux de transition, sous forme de particules de forme isotrope et de surface spécifique élevée ou sous forme de céramiques, leur préparation et leur application, notamment dans la fabrication de thermistances.

On sait que les manganites de métaux de transition sont les constituants de base de céramiques permettant de réaliser des composants passifs tels que des thermistances à coefficient de température négatif, (couramment désignées par le sigle C.T.N.)

Ces composants passifs trouvent des débouchés de plus en plus importants en tant que capteurs de température, par exemple dans le domaine spatial ou médical ou dans le domaine de l'automobile ou de l'électroménager.

Il sont utilisés également dans d'autres applications telles que la régulation des tensions, la protection contre les surtensions, la temporisation des relais, les analyseurs de gaz, la compensation des dérivés en température, etc...

Le développement de l'industrie électronique et les exigences de miniaturisation nécessitent la mise au point de produits de plus en plus performants, tant en ce qui concerne la reproductibilité que la fiabilité dans le temps des caractéristiques électriques.

Actuellement, les manganites sont préparés par la mise en oeuvre de réactions solide-solide nécessitant des mélanges à l'état solide de poudres d'oxydes ($MnO_2$, $NiO$, $Co_3O_4$,...), des broyages répétés et des recuits à températures élevées.

De telles techniques ne permettent pas le contrôle de la morphologie des poudres obtenues, ni celui de l'homogénéité des compositions au niveau submicronique.

Or, l'homogénéité des compositions est une condition essentielle pour l'obtention de dispositifs présentant des caractéristiques de reproductibilité et de fiabilité élevées.

En effet, les opérations de broyage et de "mélangeage" rendues nécessaires par les techniques industrielles actuelles de préparation des manganites conduisent très difficilement à des mélanges suffisamment homogènes, en particulier lorsque les oxydes de départ, comme cela arrive fréquemment, ont des surfaces spécifiques très différentes.

Ainsi, la technique industrielle actuelle de préparation des C.T.N. à base de manganites présente des inconvénients importants, provenant de la difficulté d'obtenir des matières premières ayant des propriétés chimiques, structurales et morphologiques reproductibles. En particulier l'industriel fabricant est dans une grande dépendance vis-à-vis du fournisseur des matières premières.

En outre, ce procédé industriel actuel de préparation des manganites met en oeuvre des réactions solide-solide qui sont effectuées à température élevée et qui nécessitent des broyages répétés, ainsi que des mélangeages et des recuits. Ces opérations sont longues et onéreuses, et elles ne permettent pas de maîtriser de façon satisfaisante l'homogénéité et la morphologie des poudres obtenues.

On sait que pour obtenir des céramiques bien densifiées et présentant des caractéristiques électriques fiables et reproductibles, il est nécessaire d'utiliser comme produits de départ des poudres homogènes de surface spécifique optimisée.

La présente invention repose sur la découverte d'un nouveau procédé qui a permis d'obtenir pour la première fois des compositions particulaires de manganites ayant une morphologie et un degré d'homogénéité tels que ces compositions doivent être considérées comme des produits nouveaux.

En outre, le procédé de l'invention présente l'avantage de ne pas utiliser des réactions solide-solide et de pouvoir être mis en oeuvre à des températures inférieures à celles utilisées dans les procédés actuels.

Le procédé de l'invention est fondé sur l'utilisation d'oxalates comme produits de départ.

La préparation de manganites de nickel par décomposition à l'air d'oxalates de manganèse et de nickel à des températures allant de 730 à 1050°C environ a été décrite par D.G. Wickham, J.Inorg. Nucl. Chem., 1964, Vol. 26, p.p. 1369-1377.

Un tel procédé permet d'obtenir des manganites ayant une structure de type spinelle. Toutefois, ce procédé ne permet pas de contrôler la morphologie des poudres de manganites obtenues. En effet, l'étude de la décomposition à l'air des oxalates mixtes de manganèse et de nickel a été reprise par les auteurs de la présente invention, et les observations recueillies par l'analyse thermogravimétrique, l'analyse thermique différentielle et l'analyse radiocristallographique ont permis d'expliquer la raison pour laquelle cette réaction de décomposition à l'air ne pouvait pas conduire à l'obtention de poudres ayant une morphologie satisfaisante.

Cette étude a montré que la décomposition des oxalates mixtes conduit vers 440°C à un oxyde mixte amorphe aux rayons X. Chauffé à l'air au delà de cette température, cet oxyde mixte amorphe, très réactif, s'oxyde fortement jusqu'à 700°C environ et cristallise en donnant deux phases : l'une rhomboédrique

EP 0 206 885 B1

(NiMnO₃), et l'autre cubique (Mn₂O₃).

Ces phases ne disparaissent que vers 800°C pour donner une seule phase spinelle de manganite.

Ainsi, le procédé de décomposition à l'air des oxalates ne conduit pas directement aux manganites purs puisqu'on obtient intermédiairement la phase NiMnO₃ qui réagit ensuite vers 800°C avec Mn₂O₃ par une réaction solide-solide. C'est en raison de la nécessité d'effectuer une telle réaction solide-solide que le procédé de décomposition à l'air des oxalates ne permet pas de maîtriser suffisamment, pour les raisons expliquées ci-dessus, les propriétés des poudres obtenues. On a constaté en effet que ladite réaction solide-solide effectuée vers 800°C conduit à l'obtention de poudres ayant une granulométrie élevée et une surface spécifique faible (de l'ordre de 1 m²/g) incompatibles avec les caractéristiques souhaitées pour l'obtention ultérieure de céramiques.

Il faut signaler en outre que les poudres de manganites obtenues par le procédé connu de décomposition d'oxalates à l'air ont une granulométrie hétérogène, avec deux distributions de tailles de particules.

La présente invention permet de remédier à ces inconvénients en effectuant une décomposition des oxalates en atmosphère contrôlée permettant d'aboutir directement aux manganites, sans passer par l'intermédiaire de la phase NiMnO₃.

Ce nouveau procédé de décomposition des oxalates en atmosphère contrôlée permet d'obtenir les manganites à des températures ne dépassant généralement pas 700°C.

Outre le gain important sur les températures réactionnelles, le fait d'élaborer les manganites de nickel, sans passer par le composé NiMnO₃, amène une répartition plus homogène des éléments, une bonne isotropie de forme des particules, et surtout la possibilité de maîtriser la granulométrie et la surface spécifique, ce qui est un avantage essentiel pour la fabrication de céramiques. En particulier, on n'obtient qu'une seule distribution homogène de tailles de particules.

En ce qui concerne la préparation des manganites de cobalt, l'étude de la décomposition à l'air des oxalates mixtes de cobalt et de manganèse a montré que le comportement de ces oxalates était différent de celui observé avec les oxalates de nickel et de manganèse. En particulier on n'observe pas de phénomène d'oxydation notable et l'analyse radiocristallographique ne permet pas de mettre en évidence une phase CoMnO₃ analogue à la phase NiMnO₃ observée dans le cas du nickel.

Toutefois, dans le cas du cobalt, le procédé de l'invention de décomposition en atmosphère contrôlée présente également des avantages inattendus. En effet, la décomposition en atmosphère contrôlée des oxalates mixtes de manganèse et de cobalt conduit à des poudres présentant une morphologie améliorée en ce qui concerne la granulométrie, l'isotropie de forme des grains, leur dimension, et leur surface spécifique. Ces meilleures caractéristiques se traduisent par des propriétés améliorées dans la céramique finale. Dans ce cas encore, il y a donc un avantage important à décomposer les oxalates en atmosphère contrôlée, comme pour les manganites de nickel.

On a également observé des avantages analogues dans la réalisation de manganites d'autres métaux de transition.

La présente invention a pour objet des compositions de dérivés de type manganite ou analogues, à structure de type spinelle, de formule générale I :

$$Mn_{3-x-y-z} \, Ni_x \, Co_y \, M_z \, O_4 \qquad (1)$$

dans laquelle :
- M représente au moins un métal divalent choisi parmi le cuivre, le zinc et le cadmium,
- x, y et z sont des nombres pouvant varier de 0 à 1,
- et la somme $(x + y + z)$ est inférieure à 2,
- étant entendu que les nombres x, y et z ne peuvent pas être tous nuls simultanément, que x peut varier de 0,6 à 1 lorsque $y = z =$ zéro et que y peut varier de 0,6 à 1 lorsque $x = z =$ zéro ; lesdites compositions pouvant contenir en outre, dans une proportion ne dépassant pas 5 % en atomes, par rapport au nombre total d'atomes (Mn + Ni + Co + M), un agent dopant,

  lesdites compositions étant soit sous forme de compositions particulaires, caractérisées par le fait qu'au moins 90 % des particules présentent les caractéristiques suivantes :
- morphologie : forme régulière et sensiblement isotrope,
- granulométrie : dimensions inférieures ou égales à 5 micromètres,
- surface spécifique supérieure à 3 m²/g ;

  soit sous forme de céramiques caractérisées par le fait qu'elles possèdent une densité au moins égale à 94 % de la densité théorique.

Il convient de noter que dans la formule I, M peut représenter plusieurs métaux tels que par exemple le cuivre, le zinc, le cadmium, etc...

4

Autrement dit, da

$$M^1_{z1} \ M^2_{z2} \ M^3_{z3} \ etc...$$

ns ce cas, $M_z$ représente, dans la formule I : avec $M^1$, $M^2$, $M^3$ représentant chacun un métal que peut représenter M ; z1, z2, z3 étant des nombres pouvant varier de 0 à 1 tels que z1 + z2 + z3 = z, z étant défini comme ci-dessus.

Parmi les agents dopants qui peuvent être présents dans les compositions de l'invention, on citera par exemple l'aluminium, le vanadium, le chrome, le titane, le bore, le silicium, le germanium, l'antimoine, le baryum ou encore une terre rare comme le samarium, et...

La surface spécifique des poudres peut être mesurée par la méthode B.E.T., c'est-à-dire par la mesure de l'absorption et de la désorption d'un gaz inerte à basse température.

L'invention a notamment pour objet des compositions particulaires de dérivés de formule I, en particulier à base de nickel (y = z = 0), à base de cobalt (x = z = 0), ainsi que des compositions contenant à la fois du nickel et du cobalt, du nickel et du cuivre, du nickel et du zinc, ou du nickel et du cadmium, des compositions sans nickel ou encore des compositions ne contenant ni nickel, ni cobalt, par exemple des compositions telles que M = Cd et Cu ; ou M = Cd et Zn ; ou M = Cu et Zn, etc.....

L'invention concerne en particulier les compositions de dérivés de formule I dont le nombre de constituants (Mn, Ni, Co, M) est au total de 2 ou 3, et notamment les compositions décrites ci-après dans la partie expérimentale.

L'invention a également pour objet un procédé de préparation des compositions telles que définies précédemment.

Ce procédé est principalement caractérisé par le fait que l'on chauffe un oxalate ou un oxalate mixte de formule II :

$$(Mn_{1-u-v-w} \ Ni_u \ Co_v \ M_w) \ C_2O_4 \qquad (II)$$

dans laquelle :
- M est défini comme précédemment,
- u, v et w sont des nombres tels que :
  3u = x, 3v = y et 3w = z,
  x, y et z étant définis comme précédemment,
  ou un hydrate dudit oxalate, en atmosphère constituée par un mélange d'un gaz inerte et d'oxygène ayant une pression partielle d'oxygène réduite, à la température de décomposition de l'oxalate considéré ; que l'on maintient ladite température jusqu'à décomposition complète de l'oxalate ; que l'on chauffe le produit obtenu en atmosphère inerte à une température supérieure à 420 et inférieure à 800°C pendant un temps suffisant pour obtenir des particules ayant les dimensions et la surface spécifique souhaitées ; puis que, si désiré, on transforme les compositions particulaires obtenues en céramiques selon les méthodes usuelles.

Dans des modes d'exécution particuliers, le procédé de l'invention peut encore présenter les caractéristiques suivantes, prises isolément ou en combinaison :
- on effectue le premier chauffage sous une pression partielle réduite d'oxygène, inférieure à 0,1 atmosphère (environ $10^4$ Pa), pouvant varier par exemple de 0,05 à 0,1 atmosphère (environ $5.10^3$ à $10^4$ Pa), et en particulier de 0,065 à 0,075 atmosphère ($6,5.10^3$ à $7,5.10^3$ Pa) ;
- on effectue ledit premier chauffage dans une atmosphère constituée par un mélange d'azote et d'oxygène ;
- on effectue le second chauffage à une température pouvant varier de préférence de 500 à 700°C environ ;
- on effectue ledit second chauffage en l'absence d'oxygène, par exemple en atmosphère d'azote ;
- après le second chauffage, on refroidit rapidement, par trempe, le produit obtenu, en atmosphère inerte, par exemple d'azote.

Comme indiqué ci-dessus, le procédé de décomposition des oxalates en atmosphère contrôlée conduit directement aux manganites. Par exemple, dans le cas des composés à base de nickel, les oxydes obtenus après décomposition des oxalates en atmosphère peu oxydante sont transformés directement en manganites de nickel sans apparition transitoire d'une phase $NiMnO_3$.

Outre le gain important sur les températures, le fait d'élaborer les manganites sans passer par le

composé $NiMnO_3$ amène une répartition plus homogène des éléments et permet en outre d'améliorer la granulométrie et la surface spécifique, ce qui est essentiel pour la transformation ultérieure en céramiques. Il convient de noter à ce sujet que la surface spécifique des poudres est modulable et peut par exemple être réduite, si nécessaire, en augmentant la durée et/ou la température de chauffage tandis que, dans les mêmes conditions, la taille des particules augmente.

Les céramiques, qui font également partie de l'invention, sont préparées selon les méthodes usuelles. Elles se caractérisent notamment par une densité élevée, supérieure à 94 % de leur densité théorique. L'obtention de céramiques de densité élevée est en effet une condition importante pour la réalisation de composants ayant de bonnes propriétés électroniques. Ces céramiques possèdent notamment des résistivités relativement faibles, allant généralement de quelques dizaines à quelques milliers d'ohm.cm.

Un autre avantage des céramiques de l'invention est qu'elles peuvent être obtenues à une température de frittage inférieure à la température nécessaire pour obtenir un frittage satisfaisant avec des manganites préparés selon les procédés classiques. Le gain de température est voisin de 150° C environ.

L'invention a également pour objet l'application des compositions particulières décrites ci-dessus à l'obtention de céramiques, et l'utilisation de ces céramiques notamment comme thermistances.

Les exemples suivants illustrent l'invention sans toutefois la limiter.

EXEMPLES 1 à 3

A. On donne ci-après, à titre illustratif, un mode de préparation détaillé d'un manganite de nickel de formule I avec $y = z = 0$ et $x = 0,66$.
(Produit de l'exemple 1 ; voir tableau 1 ci-après).

On utilise comme produit de départ un oxalate mixte de manganèse et de nickel de formule $(Mn_{0.78} Ni_{0.22}) C_2O_4, 2H_2O$.

Cet oxalate mixte a été obtenu de la façon suivante :

On pèse :
- 52,30 g de $NiCl_2$, 6 $H_2O$
- 154,21 g de $MnCl_2$, 4 $H_2O$
  et
- 144,95 g d'oxalate d'ammonium

On dissout ces trois sels, séparément et à froid, dans l'eau de façon à obtenir des concentrations de 2 moles/l pour $NiCl_2$ et $MnCl_2$ et de 0,17 mole/l pour l'oxalate d'ammonium. On mélange les solutions de sels de manganèse et de nickel, on agite pendant environ 10 minutes. A ce mélange, on ajoute la solution d'oxalate d'ammonium. On agite pendant 15 à 20 minutes. Le précipité obtenu est de couleur verte. On filtre enfin ce précipité constitué par l'oxalate ayant la formule indiquée.

La décomposition de cet oxalate mixte, sous atmosphère contrôlée ($P_{O_2} = 0,065$ atm, $P_{N_2} = 0,935$ atm) à 700° C conduit au manganite de formule $Mn_{2.34} Ni_{0,66} O_4$.

Note : 1 atmosphère vaut environ $10^5$ Pa.

On dispose 10 g dudit oxalate mixte dans un réacteur dans lequel on établit une atmosphère constituée par un mélange gazeux azote/oxygène dans les proportions volumiques respectives 100 : 6,5 soit une pression partielle d'oxygène de 6,5. $10^3$ Pa (0,065 atmosphère).

On chauffe l'oxalate jusqu'à une température de 420° C et on maintient cette température pendant deux heures.

On remplace ensuite le mélange gazeux azote/oxygène par une atmosphère inerte (azote) et l'on chauffe le produit réactionnel jusqu'à 700° C.

On procède alors à une trempe en atmosphère inerte de façon à éviter l'oxydation.

On obtient ainsi un manganite de nickel sous la forme d'une poudre dont les particules présentent les caractéristiques suivantes :
- granulométrie : octaèdres de 4 à 5 $\mu$m
- surface spécifique : 6 m²/g
- phase : une seule phase spinelle cubique (paramètre a = 0,8451 nm (8,451 Angströms))

B. A l'aide de la composition particulière obtenue on a préparé des pièces de céramique en opérant de la façon suivante : On mélange 10 g de la poudre obtenue avec 15 % en poids d'un agent liant (RHODOVIOL 4/20 commercialisé par RHONE-POULENC) et l'on presse le mélange sous la forme d'un disque, de diamètre 0,5 cm et d'épaisseur voisine de 0,1 cm, sous une pression de 4 kbars.

On soumet les disques pressés obtenus à un frittage à l'air à température de 1160° C, le temps de frittage étant de 2 heures. On refroidit ensuite à la vitesse de 30° C/heure.

Les résultats obtenus avec divers oxalates mixtes de départ sont résumés dans le tableau I ci-après (exemples 1 à 3).

C. On a étudié les propriétés de la céramique obtenue, par comparaison avec celle qui a été préparée avec un manganite de nickel de composition analogue mais obtenu par décomposition à l'air de l'oxalate mixte correspondant.

EXEMPLES 4 et 5

Préparation de manganites de cobalt.

En opérant comme précédemment, mais au départ d'oxalates mixtes de manganèse et de cobalt, on a préparé les compositions de manganites présentant les caractéristiques qui sont résumées dans le tableau II ci-après.

Les propriétés des céramiques obtenues au départ de ces manganites sont également résumées dans le tableau II.

EXEMPLES 6 à 12

De façon analogue, on a préparé les manganites mixtes et les céramiques correspondantes, avec les compositions et dans les conditions indiquées dans les tableaux III et IV.

TABLEAU I

| EXEMPLES | COMPOSITION | DENSITES* | | RESISTIVITES (ohm.cm) | | B (K) | |
|---|---|---|---|---|---|---|---|
| | $Mn_{3-x}Ni_xO_4$    x = | a | b | a | b | a | b |
| 1 | 0,66 | 4,7 | 4,9 | 2.265 | 2.070 | 3.908 | 3.900 |
| 2 | 0,71 | 4,7 | 4,9 | 2.330 | 1.588 | 3.876 | 3.875 |
| 3 | 0,81 | 4,7 | 4,9 | 1.592 | 1.030 | 3.827 | 3.855 |

B = Coefficient de température (en °K)
a = Décomposition de l'oxalate à l'air à 800°C
b = Décomposition de l'oxalate en atmosphère contrôlée à 700°C

* Frittage 1.160°C

TABLEAU II

| EXEMPLES | COMPOSITION | DENSITES* | | RESISTIVITES* (ohm.cm) | | B (K)* | |
|---|---|---|---|---|---|---|---|
| | $Mn_{3-x}Co_xO_4$    x = | a | b | a | b | a | b |
| 4 | 0,81 | 4,2 | 4,8 | $2,4.10^6$ | 399.000 | 5.250 | 5.210 |
| 5 | 0,96 | 4,4 | 4,8 | 158.000 | 132.500 | 5.200 | 5.250 |

a = Particules obtenues à 700°C à l'air
b = Particules obtenues à 700°C sous atmosphère contrôlée

* Ex.4 = Frittage 1.300°C
Ex.5 = Frittage 1.250°C

## TABLEAU III

| EXEMPLES | COMPOSITION | FRITTAGE | DENSITE | RESISTIVITE (ohm.cm) | B (K) |
|---|---|---|---|---|---|
| 6 | $Ni_{0,63}\ Co_{0,15}\ Mn_{2,22}\ O_4$ | F 1280°C 2h | 4,8 | 1.010 | 3.770 |
| 7 | $Co_{0,33}\ Ni_{0,31}\ Mn_{2,36}\ O_4$ | F 1300°C 4h | 4,8 | 2.660 | 3.890 |
| 8 | $Co_{0,67}Ni_{0,13}\ Mn_{2,20}\ O_4$ | F 1300°C 4h | 4,8 | 15.500 | 4.260 |
| F = Frittage | | | | | |

## TABLEAU IV

| EXEMPLES | COMPOSITION | FRITTAGE | DENSITE | RESISTIVITE (ohm.cm) | B (K) |
|---|---|---|---|---|---|
| 9 | $Cd_{0,63}\ Ni_{0,71}\ Mn_{1,66}\ O_4$ | F 1100°C 2h | 5,2 | 3.500 | 4.240 |
| 10 | $Ni_{0,60}\ Cu_{0,06}\ Mn_{2,34}\ O_4$ | F 1160°C 2h | 4,8 | 666 | 3.665 |
| 11 | $Zn_{1,06}\ Ni_{0,60}\ Mn_{1,34}\ O_4$ | F 1100°C 2h | 5,1 | 2.990 | 3.880 |
| 12 | $Cu_{0,87}\ Mn_{2,13}\ O_4$ | F 1000°C 1h | 4,8 | 15 | 2.430 |
| F = Frittage | | | | | |

## EXEMPLES 13 et 14

Préparation de manganites mixtes de nickel et de cuivre dopés à l'aluminium.

La préparation des oxalates est faite comme précédemment par addition d'oxalate d'ammonium dans une solution aqueuse renfermant des chlorures de manganèse, de nickel, de cuivre et également d'aluminium. Pour obtenir une teneur de 0,3 % d'aluminium (en atomes) dans l'oxyde, il est nécessaire de dissoudre une quantité de chlorure d'aluminium correspondant à 5 % (molaire).

Les conditions de décomposition restent les mêmes que celles indiquées dans les exemples précédents. Le type de frittage et les propriétés physico-chimiques des céramiques obtenues sont indiquées

8

TABLEAU V

| EXEMPLES | COMPOSITION | FRITTAGE | DENSITE | RESISTIVITE (ohm x cm) | B(K) | $\frac{\Delta R}{R}$ (*) |
|---|---|---|---|---|---|---|
| 13 | $Mn_{1,88}\ Ni_{0,66}\ Cu_{0,45}\ Al_{0,01}\ O_4$ | 1180°C 2 H refroidissement 30°C/heure | 5,1 | 2 | 2200 | < 5 % |
| 14 | $Mn_{1,67}\ Ni_{0,66}\ Cu_{0,66}\ Al_{0,01}\ O_4$ | 1180°C 2 H refroidissement 30°C/heure | 5,1 | 0,5 | 1480 | < 2 % |

(*) $\frac{\Delta R}{R}$ : variation relative de la résistance d'une pièce de céramique après un maintien à 125°C pendant 1000 heures.

dans le tableau V.

**Revendications**

1. Compositions de dérivés de type manganites ou analogues, à structure de type spinelle, de formule générale I :

$$Mn_{3-x-y-z}\ Ni_x\ Co_y\ M_z\ O_4 \qquad (I)$$

dans laquelle :
- M représente au moins un métal divalent choisi parmi le cuivre, le zinc et le cadmium,
- x, y et z sont des nombres pouvant varier de 0 à 1,
- et la somme $(x + y + z)$ est inférieure à 2,
- étant entendu que les nombres x, y et z ne peuvent pas être tous nuls simultanément, que x peut varier de 0,6 à 1 lorsque $y = z = $ zéro et que y peut varier de 0,6 à 1 lorsque $x = z = $ zéro ; lesdites compositions pouvant contenir en outre, dans une proportion ne dépassant pas 5 % en atomes, par rapport au nombre total d'atomes (Mn + Ni + Co + M), un agent dopant,
  lesdites compositions étant soit sous forme de compositions particulaires, caractérisées par le fait qu'au moins 90 % des particules présentent les caractéristiques suivantes :
- morphologie : forme régulière et sensiblement isotrope,
- granulométrie : dimensions inférieures ou égales à 5 micromètres,
- surface spécifique supérieure à 3 $m^2/g$ ; soit sous forme de céramiques caractérisées par le fait qu'elles possèdent une densité au moins égale à 94 % de la densité théorique.

2. Compositions selon la revendication 1, caractérisées par le fait que les agents dopants sont choisis parmi l'aluminium, le vanadium, le chrome, le titane, le bore, le silicium, le germanium, l'antimoine, le baryum ou encore une terre rare comme le samarium.

3. Compositions selon l'une quelconque des revendications précédentes, caractérisées par le fait qu'il s'agit de compositions à base de nickel pour lesquelles $y = z = 0$.

4. Compositions selon l'une quelconque des revendications 1 et 2, caractérisées par le fait qu'il s'agit de compositionsà base de cobalt pour lesquelles $x = z = 0$.

9

5. Compositions selon l'une quelconque des revendications 1 et 2, caractérisées par le fait qu'elles contiennent à la fois du nickel et du cobalt, du nickel et du cuivre, du nickel et du zinc ou du nickel et du cadmium.

6. Compositions selon l'une quelconque des revendications 1 et 2, caractérisées par le fait que $x = y = 0$ et M représente Cd et Cu ou Cd et Zn ou Cu et Zn.

7. Compositions selon l'une quelconque des revendications 1 et 2, caractérisées par le fait que le nombre de constituants (Mn, Ni, Co, M) est au total de 2 ou 3.

8. Procédé de préparation d'une composition telle que définie dans l'une quelconque des revendications précédentes, caractérisé par le fait que l'on chauffe un oxalate ou un oxalate mixte de formule II :

$$(Mn_{1-u-v-w} Ni_u Co_v M_w) C_2O_4 \qquad (II)$$

dans laquelle :
- M est défini comme dans la revendication 1,
- u, v et w sont des nombres tels que :
  $3u = x$, $3v = y$ et $3w = z$,

  x, y et z étant définis comme dans la revendication 1, ou un hydrate dudit oxalate, en atmosphère constituée par un mélange d'un gaz inerte et d'oxygène ayant une pression partielle d'oxygène réduite, à la température de décomposition de l'oxalate considéré ; que l'on maintient ladite température jusqu'à décomposition complète de l'oxalate ; que l'on chauffe le produit obtenu en atmosphère inerte à une température supérieure à 420 et inférieure à 800 °C pendant un temps suffisant pour obtenir des particules ayant les dimensions et la surface spécifique indiquées dans la revéndication 1 ; puis que, si désiré, on transforme les compositions particulaires obtenues en céramiques selon les méthodes usuelles.

9. Procédé selon la revendication 8, caractérisé par le fait que l'on effectue le premier chauffage sous pression partielle réduite d'oxygène inférieure à 0,1 atmosphère (environ $10^4$ Pa).

10. Procédé selon l'une quelconque des revendications 8 et 9, caractérisé par le fait que l'on effectue le second chauffage à une température pouvant varier de 500 à 700 °C environ.

11. Procédé selon l'une quelconque des revendications 8 à 10, caractérisé par le fait qu'après le second chauffage on refroidit rapidement, par trempe, le produit obtenu, en atmosphère inerte.

12. Utilisation des compositions particulaires telles que définies dans l'une quelconque des revendications 1 à 7, pour l'obtention de céramiques et utilisation de ces céramiques comme thermistances.

## Claims

1. Compositions of derivatives of manganite or similar type, having a spinel-type structure, of general formula I:

$$Mn_{3-x-y-z}Ni_xCo_yM_zO_4 \qquad (I)$$

in which:
- M represents at least one divalent metal chosen from copper, zinc and cadmium,
- x, y and z are numbers which may vary from 0 to 1,
- and the sum $(x + y + z)$ is less than 2,
- it being understood that the numbers x, y and z may not all simultaneously be zero, that x may vary from 0.6 to 1 when $y = z = $ zero and that y may vary from 0.6 to 1 when $x = z = $ zero; it being possible for the said compositions also to contain a doping agent in a proportion not exceeding 5 atom %, relative to the total number of (Mn + Ni + Co + M) atoms, the said compositions being either in the form of particulate compositions, characterised in that at least 90% of the particles have the following characteristics:
- morphology: regular and substantially isotropic shape,

- particle size distribution: dimensions smaller than or equal to 5 micrometres,
- specific surface area greater than 3 m²/g;
  have a density of at least 94% of the theoretical density.

2. Compositions according to Claim 1, characterised Mm that the doping agents are chosen from aluminium, etvanadium, chromium, titanium, boron, silicon, germanium, antimony, barium or a rare earth such as samarium.

3. Compositions according to either one of the preceding claims, characterised in that these are nickel-based compositions for which y = z = 0.

4. Compositions according to either of Claims 1 and 2, characterised in that these are cobalt-based compositions for which x = z = 0.

5. Compositions according to either of Claims 1 and 2, characterised in that they contain both nickel and cobalt, nickel and copper, nickel and zinc or nickel and cadmium.

6. Compositions according to either of Claims 1 and 2, characterised in that x = y = 0 and M represents Cd and Cu or Cd and Zn or Cu and Zn.

7. Compositions according to either of Claims 1 and 2, characterised in that the number of constituents (Mn, Ni, Co, M) is 2 or 3 in total.

8. Process for the preparation of a composition as defined in any one of the preceding claims, characterised in that an oxalate or a mixed oxalate of formula II:

$$(Mn_{1-u-v-w}Ni_uCo_vM_wC_2O_4 \qquad (II)$$

in which:
- M is defined as in Claim 1, and
- u, v and w are numbers such that:
  3u = x, 3v = y and 3w = z,
  x, y and z being defined as in Claim 1,
  or a hydrate of the said oxalate, is heated in an atmosphere consisting of a mixture of an inert gas and oxygen having a reduced oxygen partial pressure, at the decomposition temperature of the oxalate under consideration; in that the said temperature is maintained until complete decomposition of the oxalate; in that the product obtained is heated in an inert atmosphere at a temperature higher than 420 and lower than 800° C for a time sufficient to obtain particles having the dimensions and the specific surface area indicated in Claim 1; and then in that, if desired, the particulate compositions obtained are converted to ceramics using the customary methods.

9. Process according to Claim 8, characterised in that the first heating is carried out under an oxygen reduced partial pressure of less than 0.1 atmosphere (approximately 10⁴ Pa).

10. Process according to either of Claims 8 and 9, characterised in that the second heating is carried out at a temperature which may range from 500 to 700° C approximately.

11. Process according to any one of Claims 8 to 10, characterised in that, after the second heating, the product obtained is cooled rapidly, by quenching, in an inert atmosphere.

12. Use of the particulate compositions as defined in any one of Claims 1 to 7 for the production of ceramics and use of these ceramics as thermistors.

**Patentansprüche**

1. Zusammensetzungen aus Manganit-Derivaten oder Analogen davon mit einer Struktur vom Spinell-Typ der allgemeinen Formel (I)

$Mn_{3-x-y-z}Ni_xCo_yM_zO_4$     (I)

worin :
- M wenigstens ein zweiwertiges Metall, ausgewählt unter Kupfer, Zink und Cadmium bedeutet,
- x, y und z Zahlen von 0 bis 1 sind,
- und die Summe (x + y + z) kleiner als 2 ist,
- mit der Maßgabe, daß die Zahlen x, y und z nicht alle gleichzeitig 0 sein können, daß x von 0,6 bis 1 variieren kann, wenn y = z = 0 ist, und daß y von 0,6 bis 1 variieren kann, wenn x = z = 0 ist; wobei die Zusammensetzungen zudem ein Dotierungsmittel in einem Gehalt, der 5 Atom-%, bezogen auf die Gesamtatomzahl (Mn + Ni + Co + M) nicht übersteigt, enthalten kann, und die Zusammensetzungen in Form von teilchenförmigen Zusammensetzungen vorliegen, wobei sie dadurch gekennzeichnet sind, daß wenigstens 90 % der Teilchen die folgenden Merkmale aufweisen :
- Morphologie : regelmäßige und deutlich isotrope Form,
- Granulometrie : Abmessungen unterhalb oder gleich 5 μm,
- Oberflächenkennzahl : oberhalb von 3 m²/g; oder in Form von Keramiken vorliegen, wobei sie dadurch gekennzeichnet sind, daß sie eine Dichte besitzen, die wenigstens 94 % der theoretischen Dichte beträgt.

2. Zusammensetzungen nach Anspruch 1, dadurch gekennzeichnet, daß die Dotierungsmittel ausgewählt werden unter Aluminium, Vanadium, Chrom, Titan, Bor, Silicium, Germanium, Antimon, Barium oder auch einem Seltenerdmetall wie Samarium.

3. Zusammensetzungen nach einem der vorhergehenden Ansprüche, dadurch gekennzeichnet, daß es sich um Zusammensetzungen auf Nickelbasis handelt, für die y = z = 0 ist.

4. Zusammensetzungen nach einem der Ansprüche 1 und 2, dadurch gekennzeichnet, daß es sich um Zusammensetzungen auf Kobaltbasis handelt, für die x = z = 0 ist.

5. Zusammensetzungen nach einem der Ansprüche 1 und 2, dadurch gekennzeichnet, daß sie zugleich Nickel und Kobalt, Nickel und Kupfer, Nickel und Zink oder Nickel und Cadmium enthalten.

6. Zusammensetzungen nach einem der Ansprüche 1 und 2, dadurch gekennzeichnet, daß x = y = 0 ist und M Cd und Cu oder Cd und Zn oder Cu und Zn bedeutet.

7. Zusammensetzungen nach einem der Ansprüche 1 und 2, dadurch gekennzeichnet, daß die Zahl der Bestandteile (Mn, Ni, Co, M) in ihrer Gesamtheit 2 oder 3 ist.

8. Verfahren zur Herstellung einer Zusammensetzung nach einem der vorhergehenden Ansprüche, dadurch gekennzeichnet, daß ein Oxalat oder ein gemischtes Oxalat der Formel II :

$(Mn_{1-u-v-w}Ni_uCo_vM_w)C_2O_4$     (II)

in der :
- M wie in Anspruch 1 definiert ist,
- u, v und w Zahlen gemäß : 3u = x, 3v = y und 3w = z sind,
   wobei x, y und z wie in Anspruch 1 definiert sind, oder ein Hydrat dieses Oxalats in einer Atmosphäre aus einem Gemisch aus einem Inertgas und Sauerstoff mit einem verminderten Sauerstoffpartialdruck bis zur Zersetzungstemperatur des jeweiligen Oxalats erhitzt wird; die Temperatur bis zur vollständigen Zersetzung des Oxalats beibehalten wird; das erhaltene Produkt in einer Inertgasatmosphäre bei einer Temperatur oberhalb 420˚C und unterhalb 800˚C solange erhitzt wird, bis Teilchen mit den Abmessungen und der Oberflächenkennzahl wie in Anspruch 1 angegeben erhalten werden; und dann, gegebenenfalls, die erhaltenen teilchenförmigen Zusammensetzungen nach üblichen Verfahren in Keramiken überführt werden.

9. Verfahren nach Anspruch 8, dadurch gekennzeichnet, daß das erste Erhitzen unter einem verminderten Sauerstoffpartialdruck von unterhalb 0,1 Atm (etwa $10^4$ Pa) durchgeführt wird.

12

**10.** Verfahren nach einem der Ansprüche 8 und 9, dadurch gekennzeichnet, daß das zweite Erhitzen bei einer Temperatur im Bereich von etwa 500 bis 700 °C durchgeführt wird.

**11.** Verfahren nach einem der Ansprüche 8 bis 10, dadurch gekennzeichnet, daß das erhaltene Produkt nach dem zweiten Erhitzen in einer Inertatmosphäre durch Abschrecken schnell abgekühlt wird.

**12.** Verwendung der teilchenförmigen Zusammensetzungen nach einem der Ansprüche 1 bis 7 zur Herstellung von Keramiken und Verwendung dieser Keramiken als Thermistoren.